## Europäisches Patentamt

## European Patent Office

## Office européen des brevets

(11) Publication number: **0 085 288**

**B1**

(12) **EUROPEAN PATENT SPECIFICATION**

(45) Date of publication of patent specification: **22.10.86**

(51) Int. Cl.⁴: **C 01 B 21/068**

(21) Application number: **82850267.4**

(22) Date of filing: **22.12.82**

(54) A process for the production of silicon nitride.

(30) Priority: **23.12.81 SE 8107732**

(43) Date of publication of application:
**10.08.83 Bulletin 83/32**

(45) Publication of the grant of the patent:
**22.10.86 Bulletin 86/43**

(84) Designated Contracting States:
**CH DE FR GB IT LI SE**

(56) References cited:
**DE-B-2 139 722**
**GB-A-1 431 780**

**Patent Abstracts of Japan, vol. 6, no. 106, 16 June 1982**

(73) Proprietor: **KemaNord AB**
**Box 11020**
**S-100 61 Stockholm (SE)**

(72) Inventor: **Johansson, Thomas**
**Postlada 638 D**
**S-840 10 Ljungaverk (SE)**
Inventor: **Lodin, Johannes**
**Villagatan 18**
**S-840 10 Ljungaverk (SE)**

(74) Representative: **Schöld, Zaid**
**c/o KemaNobel AB Patents Box 11065**
**S-100 61 Stockholm (SE)**

Courier Press, Leamington Spa, England.

## Description

Technical Field

The present invention relates to a process for the production of silicon nitride, having a high content of alpha-phase, by heating silicon powder in the presence of nitrogen gas in a high-temperature zone.

Background of the Invention

Silicon nitride can be produced directly from the elements by reaction between silicon powder and nitrogen gas at an increased temperature. Particularly when the silicon nitride is to be used as starting material for the production of sintered products it is desirable that the silicon nitride powder has as high content as possible of the alpha-phase of silicon nitride, which phase is formed at lower temperatures than other phases, primarily the beta-phase. By carrying out the formation reaction at a temperature below about 1300°C it is possible to produce essentially pure alpha-phase silicon nitride, while the amount of beta-phase in the product increases rapidly at increased temperatures. It is also a characteristic of the silicon nitride formation reaction that it is highly exothermic which means that when the formation reaction has started, by application of external heat, the temperature must be controlled so that the heat liberated at the formation does not cause an increase of the reaction temperature and thereby an undesired shifting of the balance between the formed phases towards an increased content of beta-phase. Even if the main part of the material has a correct temperature, naturally occurring irregularities in the powder material, in combination with the exothermic heat release, leads to increased temperatures locally. Where the temperature is increased, the reaction rate is also rapidly increased giving rise to further heat generation and this means that an accelerated local deviation can occur and give a considerable formation of an undesired crystal phase. Local temperature increases can occur anywhere in the powder mass, but centrally located parts of larger bed zones are more exposed than other parts.

The possibilities to overcome these problems are to a high extent limited by the facts that both the reaction rate and the production ratio between the different crystal phases changes very rapidly with the temperature. It is thus necessary either to have rapid and advanced control systems or to accept considerably lower reaction rates than the theoretically possible or practically/economically acceptable. It is thus possible to avoid local overheating by maintaining a satisfactory safety margin for the temperature in the reactor which, however, will lead to a reduced production capacity. From GB—A—1 431 780 it is also known to measure the temperature in the reactor and to lower the partial pressure of the nitrogen when local overheating is registered. However, this will also lower the reaction rate in the reactor and, besides, the control method is complicated. Both methods suffer the disadvantage of generally decreasing the reaction rate in the reactor when it instead would be desirable to have a specific effect on those parts where local overheating occurs.

The Invention Generally

The main object of the present invention is to make it possible to have a control of the temperature in a reactor for the production of silicon nitride of such a kind that both a high production capacity and a high quality can be achieved. It is a specific object of the invention to counteract local overheating at a high reaction temperature of the reactants. Another object is to carry out temperature adjustments so that occurred undesired temperature increases are rapidly counteracted. Still another object is to find a simple method for this temperature control.

These objects are achieved in the manner evident from the appended claims.

According to the invention the particle bed of silicon and silicon nitride powder is cooled and thereby local overheating is counteracted better than with other methods and at the same time the influence on the mean temperature and thereby on the production rate will not be so pronounced. When the particle material is kept in contact with cooling surfaces or with the cooled gas phase the areas which have a higher temperature than the average will give off more heat to the cool parts than the other areas and thereby the intended result with a more concentrated effect specifically on the local overheating is achieved. Overheating is further eliminated rapidly since there is an active cooling of these and not only a counteraction of new production of exothermic heat. If a cooled gas is used a levelling effect on the temperature is also obtained through the streaming of gas relative to the particles and simultaneously the gas temperature rapidly responds to regulating changes. Cooling surfaces have a corresponding effect owing to their heat capacity and they can furthermore be positioned where local overheating can be expected. In this manner a counteraction of local overheating is obtained by simple means without the need of decreasing the reaction temperature or the reaction rate in general. This makes it possible to obtain an improved and more reproducible product quality at an unchanged production rate and/or an increased production capacity without impairment of the product since a higher mean temperature can be maintained. It is also possible to have a higher production in a given reactor volume as larger or more densely packed beds can be used or as it is possible to increase the partial pressure of the nitrogen gas. A uniform temperature also leads to a less sintered product and thus a product which is more easily crushed. Further effects and advantages will be evident from the more detailed description below.

Detailed Description of the Invention

At the production of silicon nitride the silicon component is present in the form of a powder having a particle size which generally is below about 50 μm and most often is between 5 and 25 μm. During the reaction the surfaces of the particles are first converted into silicon nitride and finally the core of the particles are converted. However, it may be suitable to mix from the start alpha-silicon nitride powder into the silicon powder to achieve a levelling effect and as seed particles for the alpha-nitride. These particles should suitably be somewhat smaller than the silicon particles or around 1 to 15 μm. Using the method of the invention the amount of added silicon nitride powder can be kept fairly small, e.g. between 5 and 50 per cent by weight. The density of the powder bed is of importance for the maximum use of the reactor capacity but must not be so high that the gas phase cannot penetrate to all parts of the bed. For a static bed the density in a reactor of this kind is thus normally about 0.8 g/cm$^3$ but using the control method of the invention it can in many cases be increased, for example to between 1.0 and 1.5 g/cm$^3$.

The nitrogen is supplied as gas and pure nitrogen can be used. The partial pressure of the nitrogen gas can, however, advantageously be reduced to below atmospheric pressure in order that the reaction rate will not be too high, particularly during the first stage of the reaction. To avoid use of negative pressure another gas, such as hydrogen or argon, should then be supplied. The partial pressure of the nitrogen gas during the main part of the reaction is suitably between 0.1 and 0.8 atm (10 and 80 kPa) and preferably between 0.4 and 0.6 atm (40 and 60 kPa). The gas should suitably be brought to flow relative to the particles since a process which is entirely controlled by diffusion can lead to a too low production capacity when the dimensions are larger. Hence, for small bed segments it may be sufficient to pass the gas over the bed surface. For larger beds, however, an improved reaction rate and improved uniformity in cooling can be obtained when the gas flows relative each particle, e.g. when the gas is forced through the bed.

Although the most simple process, especially in respect of apparatus requirement, is obtained if the gas pressure is kept around the atmospheric pressure, advantages of importance in the present connection can be reached by raising the pressure over the atmospheric pressure. A denser gas has a higher heat capacity and thereby also a greater ability to counteract overheating and also a greater ability to eliminate temperature differences by transporting heat. A high heat capacity also gives a better utilization of cooling devices and cooling surfaces in the system and is also of value when the bed in its entirety shall be heated or cooled, e.g. at start and stop. Higher pressures also means improved possibilities to use pressure variations for control of the process behavior. In order to obtain these advantages the gas pressure can suitably be kept over 5 atm (500 kPa), preferably also over 10 atm (1 MPa) and most suitably over 20 atm (MPa).

Also at these high pressures the partial pressure for the nitrogen can with advantage be kept low according to the above by use of comparatively greater amounts of inert gases. If in this way a low partial pressure of nitrogen is used, the high heat capacity of the high pressure gas will hence give an increased safety margin against overheating but no increased production rate. The reduced risk for overheating when using high total gas pressures can, however, also be used to enable higher conversion rates, for example through a slightly higher reaction temperature or a slightly higher nitrogen concentration. An increased reaction rate can be used either for increased production or for improved alpha/beta-crystal ratio in the product. An increased nitrogen content has proved especially valuable for the reaction rate in the final stage of the silica particle conversion to silica nitride.

The reaction temperature is decided with respect to the amount of beta-phase crystals which can be accepted. The temperature should suitably be kept below about 1300°C since then substantially no beta-phase is formed. If higher amounts of beta-phase can be tolerated the temperature can be higher but temperatures above about 1400°C should be avoided as otherwise there is a risk that the silicon phase will melt. As has been mentioned, the end reaction for the last amount of silicon can be conducted at temperatures somewhat above the temperature during the main reaction since the silicon material in the particle cores is converted only fairly slowly and then essentially without risk of overheating. Alternatively the reaction rate in the final stage can be increased by raising the partial pressure of the nitrogen.

As has been mentioned, the particles in the high-temperature zone shall be cooled, after that the exothermic formation reaction has been started, in order to maintain the desired even temperature pattern. This cooling can be carried out in different manners. Special cooled means can be arranged in connection with the bed, either in direct contact with the particles to make use of heat conduction or, preferably, at some distance from the particles for simplicity and for main use of radiation cooling. This cooling principle has the advantage that the cooling means, with possible enclosed cooling medium, represent a heat capacity which has an equalizing effect on the temperature differences. If the cooling surfaces are placed in the bed in the high-temperature zone the advantage of a simple construction design is gained and also a possibility to place the cooling surfaces where overheating can be expected. In this case a cooling of the gas phase is also attained.

Cooling surfaces can also be used in the form of means placed in the bed but which are not cooled with external means but only have heat transporting effect. If such means are positioned so that they pass both through hotter and cooler parts of the bed, e.g. extending radially, they will have the ability to cool the hotter parts of the bed by transporting heat from these parts to cooler parts.

In order to have this effect the means shall have better heat conductivity than the bed itself, e.g. be of metal material. Especially effective are the type of heat trasnsporting means which contain a fluid with such a selected pressure and evaporation temperature that it vaporizes at the hotter parts of the device and condenses at the cooler parts. The heat transporting devices can be used in the form of rods or discs and can preferably be used in combination with other cooling arrangements.

Cooling the gas which passes the bed is another possibility. The gas normally has a lower heat capacity than cooling surfaces and responds very rapidly to control adjustments. The method also allows simple construction solutions and has the advantage of giving a uniform cooling of the bed. The gas can be cooled in the high-temperature zone before contact with the particles or between several sections of the bed but it is preferably cooled outside the zone before it is supplied to this. To obtain an efficient cooling the gas should be circulated through the bed at a rate which is higher than what is required for the reaction and suitably between 0.1 and 2.0 reaction equivalents (totally required amount of nitrogen gas for complete conversion of the amount of silicon) are supplied per hour and preferably between 0.5 and 1.5 reaction equivalents are supplied per hour.

The above described cooling methods, which advantageously can be used in combination, are in most cases sufficient to maintain the desired temperature pattern. The methods can be combined with some kind of mixing of the bed to further reduce temperature deviations. This can be achieved with mechanical agitators mounted in the zone, which fairly simply can be used with maintained small volume of the zone. It is also possible to agitate the bed with the gas phase by designing the zone as a fluidised bed. The cooling can then be effected with the gas or with a heat exchanger in the bed.

In those cases when the bed is not agitated it is instead necessary to have a suitable dimensioning of the bed with respect to the cooling method in order to avoid too great temperature differences. The design of the bed should be such that no section of the bed has a greater distance to a cooling surface than 30 cm, preferably not greater than 20 cm and most preferably not greater than 10 cm. The external surfaces of the furnace can normally be considered as cooling surfaces when using these design dimensions. In the temperature range in question the heat absorption by the cooling surfaces takes place mainly via radiation and may thus occur over a certain distance. Of practical and constructional reasons the distances between the cooling surfaces should be at least 1 cm and preferably at least 2 cm. Suitably the cooling surfaces are evenly distributed in the bed and preferably in a symmetrical manner with respect to the central axis of the bed. For small beds a single cooling surface in the center of the bed may be sufficient. When a gas is used as a cooling medium it wil be heated when passing through the bed and also in these cases the dimensions of the bed in the flow direction of the gas must hence be limited and can here be allowed to reach 30 cm but is preferably not above 15 cm.

The cooling medium for cooling the surfaces or the gas respectively must withstand fairly high temperatures, particularly as any substantial temperature gradients on the cooling medium should not be allowed, and liquids can consequently normally not be used, but gases are preferred. Gases having the same or similar composition as the atmosphere in the zone, are advantageously used. Even if the gas in the cooling system is the same as the reaction gas it is preferred that it forms a separate closed flow circuit.

The cooling intensity should be controlled on the basis of actual temperature values measured in the bed. Since the cooling principle used according to the invention efficiently counteracts small local overheating it is in most cases sufficient to regulate on the basis of major zones with temperature deviations and increase the cooling intensity to reduce these differences. Greater differences of this kind can develop betwen exterior and interior parts of larger bed sections or between the bed parts closest to the cooling surface and farthest from this. Practically, this can be carried out by positioning the two solder joints of a thermo-couple in the bed at the expected hot and cold places, respectively, and that the amount of cooling medium or its temperature is adjusted until the measured temperature difference has been satisfactorily equalized. Continuous regulation of the amount of cooling medium or its temperature can be used, but generally an on/off-regulation is sufficient. If the bed is expected to behave differently in different major sections several thermo-couples can of course be arranged and it is then suitable if the cooling can be regulated selectively for the different sections. Several thermo-couples may also be of value to achieve a mostly uniform heating of the reactor at start up.

Constructionally, the reactor is suitably designed as a furnace having an outer housing, an insulation inside this and heating elements on the interior side of the insulation for heating the furnace at the start up. The powder bed is placed centrally, for example in the form of a hollow cylinder. When cooling surfaces are arranged in the bed it is suitable to draw heat exchange pipes through the furnace housing and through the bed in an extent sufficient to fulfil the above given dimension stipulations. The cooling surfaces can be provided with flanges or be painted black for best radiation energy absorbancy. The gas is suitably fed to the centre of the cylinder, allowed to pass the cylinder radially and collected between the jacket and the insulation of the furnace. This flow pattern can, however, also be reversed. The gas and/or the cooling medium is suitably cooled outside the furnace in a controlled manner. The parts which are exposed to the high temperatures in the process can be made of molybdenum, of graphite or, preferably, of silicon nitride.

Description of the Drawings

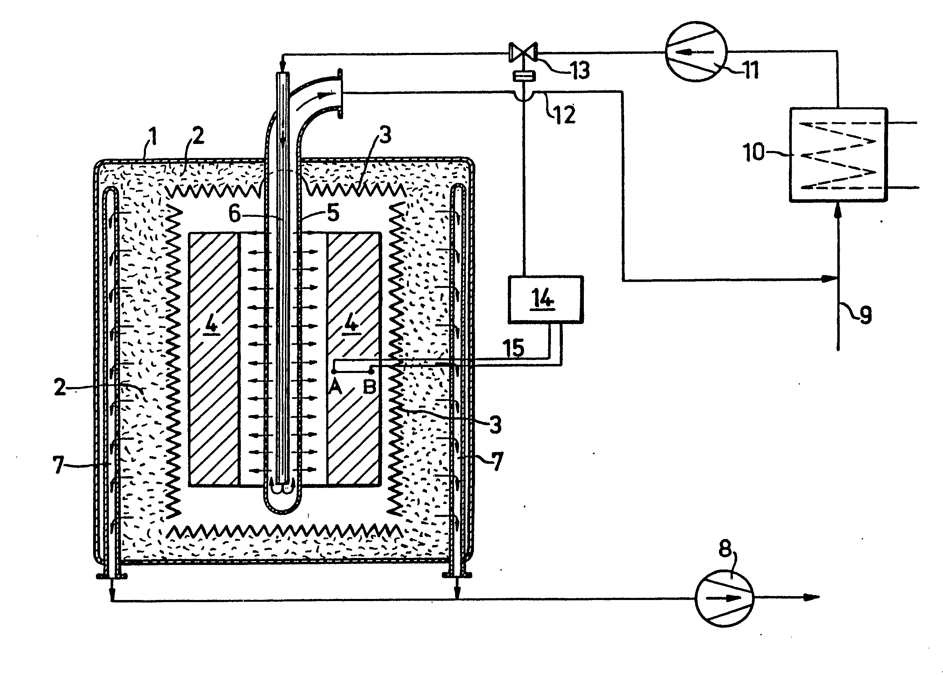

The drawing shows a cross section through a preferred apparatus suitable for use in the method according to the invention.

The drawing shows a furnace with a jacket 1, an insulation 2 inside the jacket and a heating element 3 arranged inside the insulation. A bed 4 of silicon nitride and silicon is arranged centrally in the furnace in the form of a cylinder with a central cavity. The gas is supplied in the central cavity by means of a double pipe comprising an outer perforated pipe 5 and an inner pipe 6 with a lower outlet arranged at the bottom of the outer pipe 5. Between the jacket 1 of the furnace and the insulation 2 perforated extraction pipes 7 are arranged and are connected to an extraction fan 8. A nitrogen gas mixture is supplied to the conduit 9, passes the cooler 10 and the fan 11 and the gas is thereafter supplied to the inner pipe 6. A conduit 12 connects the spaces between the pipes 5 and 6 with the main gas-inlet 9. A main gas flow through the bed in the furnace is obtained by means of the fan 8, which creates a subpressure in the furnace whereby gas is sucked through the conduit 9 to the inner pipe 6, passes the perforations of the outer pipe 5, passes the bed 4 and is removed from the furnace via the perforated pipes 7. In addition, the pump 11 creates a vacuum in the conduit 12 so that part of the gas between the pipes 5 and 6 is sucked to the main conduit 9 for a repeated passage through the cooler 10 before reentry in the inner pipe 6. The ratio between the flow in the main gas-stream and the back-flow in the conduit 12 can be regulated by adjusting the valve 13 which is controlled by the control system 14 according to the temperature differences between points A and B in the bed 4, which temperature difference is measured by the thermo-couple 15.

The cooling effect is in this example obtained by a combined effect of cooled gas and cooled surface as the cooled gas supplied to the pipe 6 lowers the temperature of the pipes 5 and 6 so that these can absorb radiation heat from the surrounding bed.

**Claims**

1. A process for the production of silicon nitride, having a high content of alpha-phase, by heating a bed of silicon powder in the presence of nitrogen containing gas above reaction temperature but below about 1400°C in a high temperature reactor, characterized in that cooling surfaces, with high absorbancy for heat radiation, are positioned in the reactor

that reactor temperature differences are measured between major reactor zones, e.g. between interior and exterior parts of larger bed sections or between bed parts close to and far from cooling surfaces, and

that heat is actively removed, after start up of the exothermic formaton reaction, via the cooling surfaces, to keep the measured temperature difference below a predetermined value.

2. A process according to claim 1, characterized in that the silicon powder is cooled by means of a stationary cooling surface.

3. A process according to claim 1, characterized in that the cooling surface is placed in contact with the silicon powder in a high-temperature zone.

4. A process according to claim 1, characterized in that the cooling surface is placed without direct contact with the silicon powder.

5. A process according to claim 1, characterized in that the cooling is carried out by a combined cooling of the nitrogen containing gas and cooling with a stationary cooling surface.

6. A process according to any of the preceding claims, characterized in that the silicon particles are agitated to eliminate local overheating.

7. A process according to claim 8, characterized in that the agitation is obtained by fluidising the silicon particles in the nitrogen containing gas.

8. The process of claim 1, characterized in that the cooling surfaces are positioned adjacent to the silicon powder bed in such a way that no section of the bed has a greater distance to a cooling surface than 30 cm.

9. The process of claim 8, characterized in that no part of the bed has a greater distance to a cooling surface than 20 cm.

10. The process of claim 8 or claim 9, characterized in that the cooling surfaces are separated with at least 1 cm.

**Patentansprüche**

1. Verfahren zur Erzeugung von Siliciumnitrid mit einem hohem Gehalt an alpha-Phase durch Erhitzen eines Bettes von Siliciumpulver in Gegenwart von stickstoffhaltigem Gas oberhalb Reaktionstemperatur, jedoch unterhalb etwa 1400°C in einem Hochtemperaturreaktor, dadurch gekennzeichnet, daß Kühlflächen mit hoher Absorptionsfähigkeit für Wärmestrahlung in dem Reaktor angeordnet sind, daß die Reaktortemperaturunterschiede zwischen größeren Reaktorzonen gemessen werden, beispielsweise zwischen inneren und äußeren Teilen größerer Bettabschnitte oder zwischen Bettabschnitten nahe bei und entfernt von Kühlflächen, und daß die Wärme aktiv entfernt wird nach dem Einsetzen der exothermen Bildungsreaktion über die Kühlflächen, um die gemessene Temperaturdifferenz unterhalb eines vorbestimmten Wertes zu halten.

2. Verfahren gemäß Anspruch 1, dadurch gekennzeichnet, daß das Siliciumpulver mittels einer stationären Kühlfläche gekühlt wird.

3. Verfahren gemäß Anspruch 1, dadurch gekennzeichnet, daß die Kühlfläche in Kontakt mit dem Siliciumpulver in einer Hochtemperaturzone angeordnet ist.

4. Verfahren gemäß Anspruch 1, dadurch gekennzeichnet, daß die Kühlfläche ohne direkten Kontakt mit dem Siliciumpulver angeordnet ist.

5. Verfahren gemäß Anspruch 1, dadurch gekennzeichnet, daß das Kühlen durch kombiniertes Kühlen des stickstoffhaltigen Gases und Kühlen mit einer stationären Kühlfläche durchgeführt wird.

6. Verfahren gemäß einem der vorhergehenden Ansprüche, dadurch gekennzeichnet, daß die Siliciumteilchen bewegt werden, um lokale Überhitzung zu vermeiden.

7. Verfahren gemäß Anspruch 6, dadurch gekennzeichnet, daß das Rühren durch Fluidisieren der Siliciumteilchen in dem stickstoffhaltigem Gas erzielt wird.

8. Verfahren gemäß Anspruch 1, dadurch gekennzeichnet, daß die Kühlflächen, angrenzend an das Siliciumpulverbett, derart angeordnet sind, daß kein Abschnitt des Betts eine größere Entfernung zu einer Kühlfläche als 30 cm hat.

9. Verfahren gemäß Anspruch 8, dadurch gekennzeichnet, daß kein Teil des Betts eine größere Entfernung zu einer Kühlfläche als 20 cm hat.

10. Verfahren gemäß Anspruch 8 oder 9, dadurch gekennzeichnet, daß die Kühlflächen wenigstens 1 cm getrennt sind.

## Revendications

1. Procédé de production de nitrure de silicium ayant une haute teneur en phase alpha, par chauffage d'un lit de poudre de silicium en présence d'un gaz contenant de l'azote, au-dessus de la température de réaction, mais au-dessous de 1400°C, dans un réacteur à haute température, caractérisé en ce que des surfaces de refroidissement ayant un fort pouvoir absorbant pour le rayonnement calorifique sont placées à l'intérieur du réacteur, en ce que les différences de température dans le réacteur sont mesurées entre de grandes zones du réacteur, par exemple entre des parties internes et externes de grandes sections du lit ou entre des parties du lit situées près ou loin des surfaces de refroidissement et en ce que la chaleur est activement évacuée, après la mise en route de la réaction de formation exothermique, par les surfaces de refroidissement, de manière à maintenir la différence de températeur mesurée au-dessous d'une valeur fixée à l'avance.

2. Procédé selon la revendication 1, caractérisé en ce que la poudre de silicium est refroidie au moyen d'une surface de refroidissement fixe.

3. Procédé selon la revendication 1, caractérisé en ce que la surface de refroidissement est mise en contact avec la poudre de silicium dans une zone à haute température.

4. Procédé selon la revendication 1, caractérisé en ce que la surface de contact n'est pas en contact direct avec la poudre de silicium.

5. Procédé selon la revendication 1, caractérisé en ce que le refroidissement s'obtient en associant le refroidissement par le gaz contenant de l'azote au refroidissement assuré par une surface de refroidissement fixe.

6. Procédé selon l'une quelconque des revendications 1 à 5, caractérisé en ce que les particules de silicium sont soumises à agitation pour éliminer toute surchauffe locale.

7. Procédé selon la revendication 6, caractérisé en ce que l'agitation est obtenue par fluidisation des particules de silicium dans le gaz contenant de l'azote.

8. Procédé selon la revendication 1, caractérisé en ce que les surfaces de refroidissement sont placées à proximité immédiate du lit de poudre de silicium de façon à ce qu'aucune partie du lit ne se trouve à une distance de plus de 30 cm d'une surface de refroidissement.

9. Procédé selon la revendication 8, caractérisé en ce qu'aucune partie du lit ne se trouve à une distance de plus de 20 cm d'une surface de refroidissement.

10. Procédé selon l'une des revendications 8 ou 9, caractérisé en ce que les surfaces de refroidissement sont distantes d'au moins 1 cm.

0 085 288